# EUROPEAN PATENT APPLICATION

(11) **EP 4 481 891 A1**
(43) Date of publication of application: **25.12.2024**
(21) Application number: 23213582.2
(22) Date of filing: 01.12.2023
(51) Int. Cl.: H01M 10/613, H01M 10/625, H01M 10/647, H01M 10/6556, H01M 10/6567, H01M 10/658, H01M 50/209, H01M 50/291, H01M 50/342, H01M 50/367

(54) **BATTERY PACK**

(30) Priority: 19.06.2023 CN 202310730179; 19.06.2023 CN 202321571433 U
(71) Applicant: Eve Energy Co., Ltd., Huizhou, Guangdong 516006 (CN)
(72) Inventor: ZHOU, Hongquan, Huizhou, 516006 (CN)
(74) Representative: Herrero & Asociados, S.L.

(57) **Abstract**

Disclosed is a battery pack according to the present disclosure. The battery pack includes a housing (1); a plurality of cell groups (3) including a plurality of cells (32); a pressure relief assembly (2) connected to the housing (1) and pressing against first sides (34) of the cell groups (3); and a liquid cooling plate (4) provided with a support member (42) located at a junction of two adjacent cell groups (3), and one side of the support member (42) supports a second side (35) of one of the two adjacent cell groups (3), another side of the support member (42) supports a second side (35) of another of the two adjacent cell groups (3).

## Description

### TECHNICAL FIELD

The present disclosure relates to a field of battery technology, and more particularly, to a battery pack.

### BACKGROUND

The Cell to Pack (CTP) technology of the battery pack meets the market demand of high specific energy and low cost. Although the CTP technology has been developed to CTP3.0, the system design is complex, the cost is high, the modularizing of system is difficult, and the efficiency is low.

In the related art, as the CTP battery pack is module-less, a cell group needs to have a higher structural strength to meet the requirements of the module-less pack. Generally, an additional structure is used to fix the cell group, which complicates the structure of the CTP battery pack.

### SUMMARY

In order to overcome at least one of the drawbacks described above in the related art, the present disclosure provides a battery pack capable of increasing system structural strength and achieving thermal electrical separation.

A battery pack according to an embodiment of the present disclosure includes a housing; a plurality of cell groups including a plurality of cells; a pressure relief assembly connected to the housing and opposite to an explosion-proof valve of each of the cells, the pressure relief assembly presses against first sides of the cell groups; and a liquid cooling plate connected to the housing and abutting against second sides of the cell groups, the second side is opposite to the first side, the liquid cooling plate is provided with a support member, the support member is located at a junction of two adjacent cell groups, and one side of the support member supports a second side of one of the two adjacent cell groups, another side of the support member supports a second side of another of the two adjacent cell groups.

In the battery pack, by providing the support member on the liquid cooling plate to support the two adjacent cell groups at the same time, the liquid cooling plate is prevented from being deformed by the cell groups. At the same time, the pressure relief assembly is pressed against the first side of the cell group, the pressure relief assembly is opposed to the explosion-proof valve of the cells, the ejection ejected from the explosion-proof valve is directed by the pressure relief assembly, and by pressing the pressure relief assembly against the cell groups, it is possible to avoid upward channeling phenomenon of the cell groups caused by the influence of the cyclic expansion force, so that the pressure relief assembly, which is a pressure relief passage of the cells, and the liquid cooling plate, which is a cooling source of the cells, form a fixed structure of the module-less battery pack, thereby realizing the combination of the mechanical structures of the pressure relief assembly, the liquid cooling plate and the housing, optimizing the structure of the battery pack, simplifying the process, and enhancing the rigidity of the system.

According to some embodiments of the present disclosure, the pressure relief pipe is provided with a plurality of weakened portions, which are arranged opposite to the explosion-proof valve.

According to some embodiments of the present disclosure, a trigger channel is formed between the pressure relief pipe and the explosion-proof valve, and a trigger pad is fitted into the trigger channel.

According to some embodiments of the present disclosure, the trigger pad is made of a high-temperature resistant insulating material.

According to some embodiments of the present disclosure, a side of the pressure relief pipe extends toward the cell groups to form a pressing edge abutting against the cell groups.

According to some embodiments of the present disclosure, adjacent cells are bonded together by a structural member.

According to some embodiments of the present disclosure, the liquid cooling plate is internally provided with a cooling chamber for accommodating a coolant.

According to some embodiments of the present disclosure, the support member is disposed in the cooling chamber.

According to some embodiments of the present disclosure, the liquid cooling plate is provided with an avoidance recess part, and the support member is embedded in the avoidance recess part.

According to some embodiments of the present disclosure, a side wall of the housing extends toward the second side of the cell groups to form a bearing part, the bearing part and the support member support different positions of the second side of the cell groups.

According to some embodiments of the present disclosure, there is further included a support frame disposed at the outside of the cell groups, an end of the support frame is fixedly connected to the side wall of the housing, and the pressure relief assembly is fixedly connected to the support frame.

According to some embodiments of the present disclosure, a base is fixedly connected between the pressure relief assembly and the support frame.

According to some embodiments of the present disclosure, a bottom guard plate is provided at a side of the housing close to the second side, and the liquid cooling plate is provided between the bottom guard plate and the cell groups.

According to some embodiments of the present disclosure, a side of the bottom guard plate close to the second side is fixedly connected to a side of the liquid cooling plate away from the second side.

In summary, the battery pack provided by the present disclosure has the following technical effects.

By providing the support member on the liquid cooling plate to support the two adjacent cell groups at the same time, the liquid cooling plate is prevented from being deformed by the cell groups. At the same time, the pressure relief assembly is pressed against the first side of the cell group, the pressure relief assembly is opposed to the explosion-proof valve of the cells, the ejection ejected from the explosion-proof valve is directed by the pressure relief assembly, and by pressing the pressure relief assembly against the cell groups, it is possible to avoid upward channeling phenomenon of the cell groups caused by the influence of the cyclic expansion force, so that the pressure relief assembly, which is a pressure relief passage of the cells, and the liquid cooling plate, which is a cooling source of the cells, form a fixed structure of the module-less battery pack, thereby realizing the combination of the mechanical structures of the pressure relief assembly, the liquid cooling plate and the housing, optimizing the structure of the battery pack, simplifying the process, and enhancing the rigidity of the system.

The trigger channel is formed between the explosion-proof valve of the cell and the pressure relief pipe, and the trigger pad is fitted into the trigger channel, so that when the explosion-proof valve of the cell erupts, the position of the trigger pad corresponding to the explosion-proof valve is broken by the ejection, and then the ejection passes through the trigger pad into the pressure relief pipe, the trigger pads at the remaining positions are not affected, and the remaining area of the trigger channel is further closed to prevent the ejection ejected from the explosion-proof valve of the cell from sputtering onto the peripheral cells or prevent the ejection in the pressure relief pipe from flowing back onto the explosion-proof valves of the peripheral cells, thereby preventing the peripheral cells from being affected.

Sides of the pressure relief pipe extend toward the cell group to form the pressing edges abutting against the cell group, to press the cell group and increase the rigidity of the pressure relief pipe and the system, so as to prevent the cell group from directly abutting against the pressure relief pipe when the cell group erupts, and to buffer the force between the cell group and the pressure relief pipe. At the same time, the pressing edge is capable of effectively preventing the ejection from overflowing from the side of the cell group, so as to prevent the ejection from the cell group from affecting the peripheral cell groups, and the extended pressing edge creates a gap between the pressure relief pipe and the explosion-proof valve, thereby forming the trigger channel, and sufficiently optimizing the structure of the module-less battery pack.

### BRIEF DESCRIPTION OF THE DRAWINGS

FIG. 1 is a schematic structural diagram of a battery pack according to some embodiments of the present disclosure;
FIG. 2 is another schematic structural diagram of a battery pack according to some embodiments of the present disclosure;
FIG. 3 is an enlarged schematic view of a region E in FIG. 2;
FIG. 4 is still another schematic structural diagram of a battery pack according to some embodiments of the present disclosure;
FIG. 5 is an enlarged schematic view of a region A in FIG. 4;
FIG. 6 is an enlarged schematic view of a region B in FIG. 4;
FIG. 7 is an enlarged schematic view of a region C in FIG. 4.

List of reference signs: 1. Housing; 11. Bearing part; 12. Bottom guard plate; 13. Support frame; 14. Sidewall; 15. Base; 2. Pressure relief assembly; 21. Pressure relief pipe; 22. Weakened portion; 23. Trigger channel; 24. Trigger pad; 25. Pressing edge; 3. Cell group; 31. Explosion-proof valve; 32. Cell; 33. Structural member; 34. First side; 35. Second side; 4. Liquid cooling plate; 41. Cooling chamber; 42. Support member; 43. Avoidance recess part.

### DETAILED DESCRIPTION

In the description of the present disclosure, it is to be noted that orientations or position relationships indicated by the terms "upper", "lower", "front", "rear", "left", "right", "vertical", "horizontal", "top", "bottom", "inside", "outside", and the like, are based on orientations or position relationships illustrated in the drawings. The terms are used to facilitate and simplify the description of the present disclosure, rather than indicate or imply that the devices or elements referred to herein are required to have specific orientations or be constructed or operate in the specific orientations. Accordingly, the terms should not be construed as limiting the present disclosure.

In the present disclosure, the first side 34 refers to a top of the cell group 3 in a vertical direction, and the second side 35 refers to a bottom of the cell group 3 in the vertical direction.

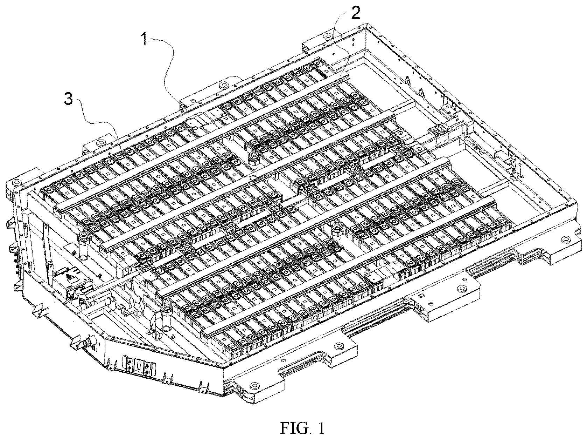

Referring to FIGS. 1, 2, 3, 4, 5, 6, and 7, in embodiments of the present disclosure, a battery pack includes a housing 1, a pressure relief assembly 2, a liquid cooling plate 4, and a plurality of cell groups 3. In some embodiments, the cell group 3 includes a plurality of cells 32; a pressure relief assembly 2 connected to the housing 1 and opposite to the explosion-proof valve 31 of the cell 32, the pressure relief assembly 2 presses against the first side 34 of the cell group 3; a liquid cooling plate 4 connected to the housing 1 and abutting against the second side 35 of the cell group 3, the second side 35 is opposite to the first side 34, the liquid cooling plate 4 is provided with a support member 42 located at the junction of two adjacent cell groups 3, and one side of the support member 42 supports the second side 35 of one of the two adjacent cell groups 3, and the other side of the support member 42 supports the second side 35 of another of the two adjacent cell groups 3. In some embodiments, by providing the support member 42 on the liquid cooling plate 4 to support the two adjacent cell groups 3 at the same time, the liquid cooling plate 4 is prevented from being deformed by the cell groups 3. At the same time, the pressure relief assembly 2 is pressed against the first side 34 of the cell group 3, the pressure relief assembly 2 is opposed to the explosion-proof valve 31 of the cells 32, the ejection ejected from the explosion-proof valve 31 is directed by the pressure relief assembly 2, and by pressing the pressure relief assembly 2 against the cell groups 3, it is possible to avoid upward channeling phenomenon of the cell groups 3 caused by the influence of the cyclic expansion force, so that the pressure relief assembly 2, which is a pressure relief passage of the cells 32, and the liquid cooling plate 4, which is a cooling source of the cells 32, form a fixed structure of the module-less battery pack, thereby realizing the combination of the mechanical structures of the pressure relief assembly 2, the liquid cooling plate 4 and the housing 1, optimizing the structure of the battery pack, simplifying the process, and enhancing the rigidity of the system.

In some embodiments, at least one of the cell groups 3 is arranged below the pressure relief assembly 2 along a length direction of the pressure relief assembly 2, and the pressure relief assembly 2 is pressed against the first side 34 of the cell group 3 to press the cell 32 against the liquid cooling plate 4, so as to prevent upward movement of the cell 32. In an embodiment, a support frame 13 disposed outside the cell group 3 is further included in the battery pack, an end of the support frame 13 is fixedly connected to a side wall 14 of the housing 1, and the pressure relief assembly 2 is fixedly connected to the support frame 13. Further, a base 15 is fixedly connected between the pressure relief assembly 2 and the support frame 13. Specifically, the connection methods adopted by the fixed connection may be a welded connection or a bolted connection. In an embodiment, the end of the support frame 13 is bolted to the side wall 14 of the housing 1, the base 15 is bolted to the support frame 13, and the pressure relief assembly 2 is bolted to the base 15. In an embodiment, the support frame 13 and the base 15 may be integrally formed, the pressure relief assembly 2 is bolted to the base 15, and the end of the support frame 13 is bolted to the side wall 14 of the housing 1, so that the pressure relief assembly 2 can be connected to the housing 1 as a reinforcing structure of the housing 1, thereby improving the strength of the housing 1. At the same time, the pressure relief assembly 2 and the explosion-proof valve 31 of the cell 32 are opposed to each other, the ejection ejected from the explosion-proof valve 31 is directed to realize thermal electrical separation and avoid the upward channeling phenomenon of the cell groups 3 caused by the influence of the cyclic expansion force which resulting in the connection failure, so that the pressure relief assembly 2 is used as a special pressure relief channel for thermal electrical separation, and the reinforcement structure of the housing 1 to improve the strength of the housing 1 and realize the combination of the mechanical structures of the pressure relief assembly 2 and the housing 1. While solving the thermal safety pressure relief of the system, the system structure is optimized, and the system rigidity is improved, so that the production cost of the module-less battery pack may be reduced, the process may be simplified, and the yield and efficiency may be improved.

Further, the plurality of the cell groups 3 may be arranged along the length direction or the width direction of the housing 1, and the first side 34 of each of the cell groups 3 is pressed against the pressure relief assembly 2. The pressure relief assembly 2 and the explosion-proof valve 31 of the cell 32 are opposed to each other, so that the ejection ejected from the explosion-proof valve 31 is directed by the pressure relief assembly 2 to solve the problem of system thermal safety pressure relief. At the same time, the cell 32 is pressed against the liquid cooling plate 4 through the pressure relief assembly 2 to avoid upward movement of the cell 32, so that the liquid cooling plate 4 may be contacted with the cell 32 for effective cooling, and the pressure relief assembly 2 provided on the plurality of cell groups 3 is further used as a reinforcing structure of the housing 1, so as to improve the strength of the housing 1 and realize the combination of the mechanical structures of the pressure relief assembly 2 and the housing 1, thereby optimizing the system structure while solving the problem of the thermal safety pressure relief of the system and improving the system rigidity, which may reduce the production cost, simplify the process, and improve the yield and efficiency. Further, a fixing structure of the battery pack in the vertical direction is formed using the pressure relief assembly 2 pressed against the first side 34 of the cell group 3 and the liquid cooling plate 4 pressed against the second side 35 of the cell group 3, and the support member 42 is provided on the liquid cooling plate 4 to support the two adjacent cell groups 3 at the same time, so that the liquid cooling plate 4 is prevented from being deformed. Therefore, the combination of the mechanical structures of the pressure relief component 2, the liquid cooling plate 4 and the housing 1 is realized, so as to optimize the structure of the module-less battery pack, simplify the process, and enhance the rigidity of the system.

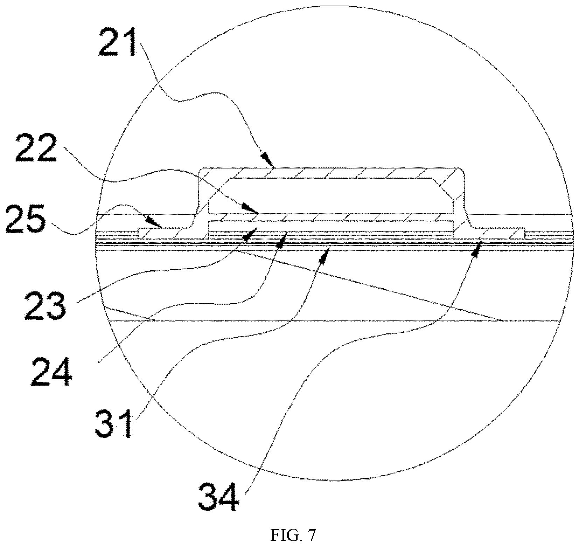

Referring to FIG. 7, in some embodiments, the pressure relief assembly 2 includes a pressure relief pipe 21, the explosion-proof valve 31 of the cell 32 is disposed corresponding to the pressure relief pipe 21, so that the high-temperature and high-pressure ejections ejected from the explosion-proof valve 31 of the cell 32 enter the pressure relief pipe 21 and are directed along the pressure relief pipe 21 so as to avoid the damage to the peripheral components or the cell 32 caused by the sputtering of the high-temperature and high-pressure ejections onto the peripheral components or the cell 32. In an embodiment, the pressure relief pipe 21 is provided with a plurality of weakened portions 22, and the weakened portion 22 is disposed corresponding to the explosion-proof valve 31. In an embodiment, the explosion-proof valve 31 of the cell 32 is correspondingly arranged below the weakened portion 22 of the pressure relief pipe 21 so that the high-temperature and high-pressure gas released when the explosion-proof valve 31 of the cell 32 is opened directly enters the pressure relief pipe 21 through the weakened portion 22 corresponding thereto, and the weakened portions 22 at the other positions of the pressure relief pipe 21 remain closed, thereby effectively preventing the ejections in the pressure relief pipe 21 from flowing back onto the explosion-proof valve 31 of the peripheral cell 32. Further, the weakened portion 22 is sealingly connected to the explosion-proof valve 31 so as to prevent the high-temperature and high-pressure ejections ejected when the explosion-proof valve 31 is opened from overflowing and sputtering onto the peripheral components or cells 32, causing damage to the peripheral components or cells 32. Further, the cell 32 may be provided with a corresponding groove corresponding to the pressure relief pipe 21, and the pressure relief pipe 21 is clamped in the groove so that the pressure relief pipe 21 is more firmly connected to the cell 32. At the same time, the weakened portion 22 of the pressure relief pipe 21 is tightly attached to the explosion-proof valve 31 of the cell group 3, or is sealingly connected to the explosion-proof valve 31 of the cell 32 through a guide member such as a pipe, so as to avoid the overflow of high-temperature and high-pressure gas discharged when the explosion-proof valve 31 is opened, and the high-temperature and high-pressure ejections discharged when the explosion-proof valve 31 is opened may be effectively guided into the pressure relief pipe 21, and is directed along the pressure relief pipe 21.

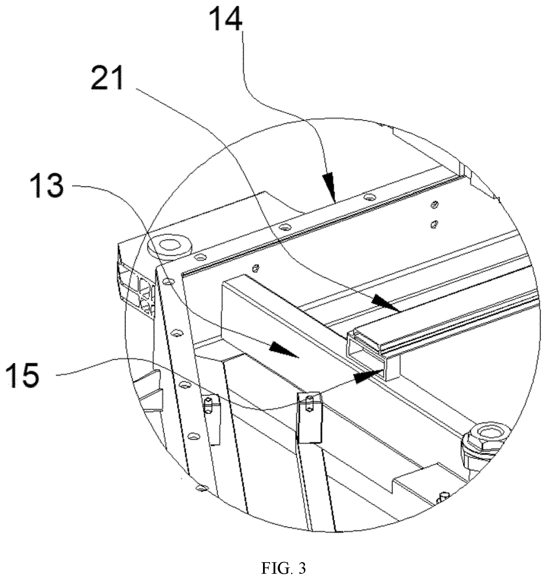

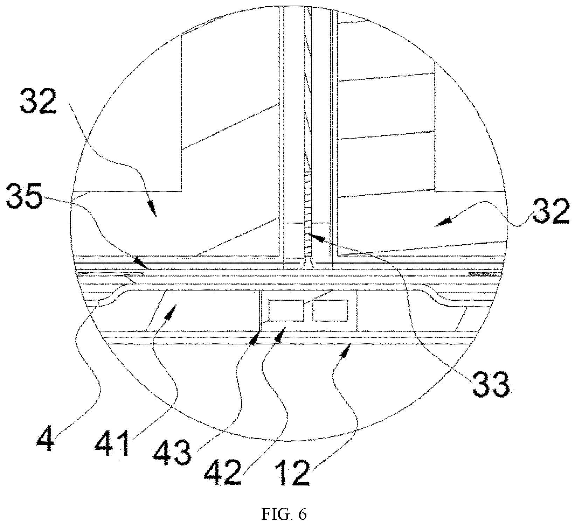

In some embodiments, the cell group 3 is limited and fixed by a fixing structure in the vertical direction formed by the liquid cooling plate 4 and the pressure-relief pipe 21, and the plurality of cells 32 are arranged along the length direction of the pressure-relief pipe 21 and are pressed under the pressure-relief pipe 21. When the explosion-proof valve 31 of a certain cell 32 is opened to discharge the high-temperature and high-pressure ejection, there may be a substance such as an electrolyte of the cell 32 in the ejection. Since each of the pressure relief pipes 21 is connected to the explosion-proof valves 31 of the plurality of cells 32 at the same time, the ejection may flow along the pressure relief pipe 21 and back to the explosion-proof valves 31 of the other cells 32 after entering the pressure relief pipe 21, which causing the explosion-proof valves 31 of the other cells 32 to be polluted or opened due to the high temperature, thereby causing a chain effect. Therefore, referring to FIGS. 3 and 6, in some embodiments, a trigger channel 23 is provided between the pressure relief pipe 21 and the explosion-proof valves 31, and a trigger pad 24 is provided in the trigger channel 23. In an embodiment, the trigger channel 23 is formed between the cell group 3 and the pressure relief pipe 21 pressed against the first side 34 of the cell group 3, and the trigger pad 24 is fitted in the trigger channel 23. When the explosion-proof valve 31 of the cell 32 erupts, the position of the trigger pad 24 corresponding to the explosion-proof valve 31 is broken by the ejection, and then the ejection sequentially passes through the trigger pad 24 and the weakened portion 22 of the pressure relief pipe 21 into the pressure relief pipe 21. Since the impact force of the explosion-proof valve 31 when the valve is opened is upward, the trigger pads 24 at the remaining positions are not affected, and the remaining area of the trigger channel 23 is further closed to prevent the ejection ejected from the explosion-proof valve 31 of the cell 32 from sputtering onto the peripheral cells 32 or prevent the ejection in the pressure relief pipe 21 from flowing back onto the explosion-proof valves 31 of the peripheral cells 32. The peripheral cells 32 are thus prevented from being affected. In an embodiment, the trigger pad 24 is made of a high-temperature resistant insulating material to prevent the trigger pad 24 from being melted by the high-temperature ejection and to effectively block the backflow of the high-temperature ejection onto the explosion-proof valves 31 of the other cells 32. Further, the trigger pad 24 is, for example, a mica paper. Specifically, the mica paper is fitted in the trigger channel 23 between the pressure relief pipe 21 and the explosion-proof valve 31 so that the trigger channel 23 is in a closed state. That is, the explosion-proof valve 31 of the adjacent cell 32 is blocked and closed by the mica paper, and the pressure relief pipe 21 and the explosion-proof valve 31 are also separated and closed by the weakened portion 22 thereof and the mica paper, so that the ejection ejected by the explosion-proof valve 31 of the adjacent cell 32 cannot be sputtered to the peripheral cells 32, and the ejection flowing in the pressure relief pipe 21 cannot pass through the trigger channel 23 provided with the mica paper, thereby avoiding the phenomenon that the ejection flows back onto the explosion-proof valve 31 of the peripheral cell 32. When an explosion-proof valve 31 of a certain cell 32 is opened and discharges the high-pressure and high-temperature ejection, under the impact of the ejection, the position of the mica paper corresponding to the explosion-proof valve 31 is broken by the ejection, while other areas of the mica paper are not affected and continue to separate the opened explosion-proof valve 31 from the other explosion-proof valves 31 and close the other explosion-proof valves 31. Then, the ejection breaks through the weakened portion 22 of the pressure relief pipe 21 into the pressure relief pipe 21, and flows along the pressure relief pipe 21. Since other positions are still closed by the mica paper and the weakened portions 22 of the pressure relief pipe 21 at the other positions are not necessarily broken, the ejection may only continue to flow along the pressure relief pipe 21 and cannot flow back to the peripheral explosion-proof valves 31, thereby effectively protecting the peripheral cell groups 3 from being affected.

In some embodiments, the sides of the pressure relief pipe 21 extend towards the cell group 3 to form a pressing edge 25 that abuts against the cell group 3. In an embodiment, both sides of the pressure relief pipe 21 extend toward the cell group 3 to form the pressing edges 25 abutting against the cell group 3 to press the battery pack 3 and increase the rigidity of the pressure relief pipe 21 and the system, so as to prevent the cell group 3 from directly abutting against the pressure relief pipe 21 when the cell group 3 erupts, and to buffer the force between the cell group 3 and the pressure relief pipe 21. At the same time, the pressing edge 25 is capable of effectively preventing the ejection from overflowing from the side of the cell group 3, so as to prevent the ejection from the cell group 3 from affecting the peripheral cell groups 3, and the extended pressing edge 25 creates a gap between the pressure relief pipe 21 and the explosion-proof valve 31, thereby forming the trigger channel 23, and sufficiently optimizing the structure of the module-less battery pack.

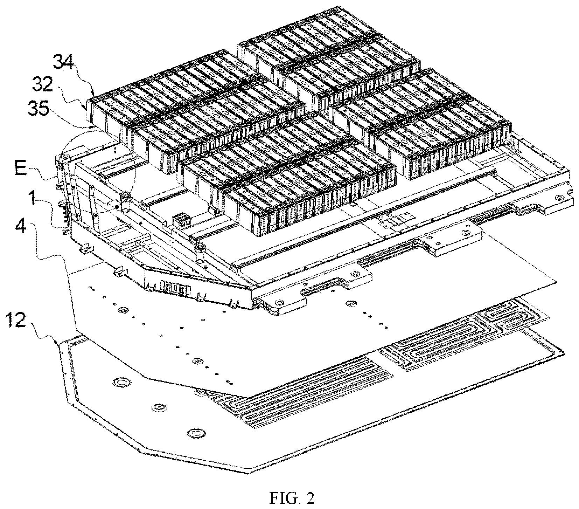

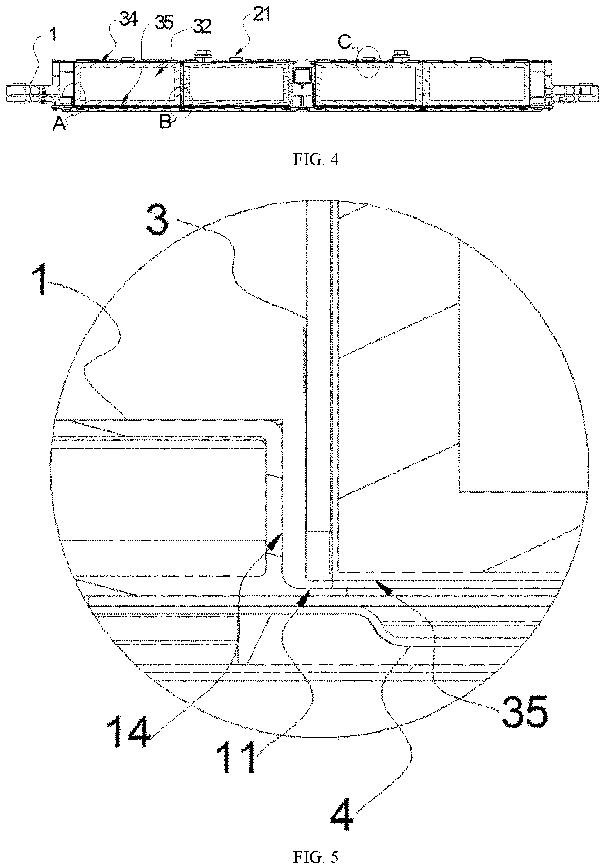

Referring to FIGS. 2, 3, 4, 5 and 6, in some embodiments, the liquid cooling plate 4 is internally provided with a cooling chamber 41 for receiving a coolant. In an embodiment, a hollow cooling chamber 41 is provided inside the liquid cooling plate 4 for receiving the coolant to cool the cell group 3 provided above the liquid cooling plate 4. In an embodiment, the cooling chamber 41 may be provided with an inlet and an outlet for the coolant. In some embodiments, the coolant in the cooling chamber 41 is replaced through the inlet and the outlet of the cooling chamber 41 to ensure the cooling effect of the liquid cooling plate 4. In practical application, since the cooling chamber 41 for accommodating the coolant is provided inside the liquid cooling plate 4, the bearing capacity of the liquid cooling plate 4 is weak, and under the long-time repressing of the power supply module, the liquid cooling plate 4 is liable to be deformed, especially in the middle region of the liquid cooling plate 4, and problems such as downward depression may easily occur, the original layout of the power supply module is damaged, and the stability of the overall structure of the system is seriously affected. Therefore, the support member 42 for supporting the cell group 3 is provided in the cooling chamber 41. In an embodiment, the support member 42 may be a grid-like structure, which can support the cell group 3 without affecting the flow of the coolant in the cooling chamber 41. Further, the support member 42 may further form a cooling flow passage in the cooling chamber 41 of the liquid cooling plate 4, and may further define a flow path of the coolant while supporting the cell group 3 by the support member 42, so that the liquid cooling plate 4 has a better load-bearing capacity and a better cooling effect. Referring to FIG. 4, in an embodiment, the side wall 14 of the housing 1 extends toward the second side 35 of the cell group 3 to form a bearing part 11. That is, one end of the cell group 3 close to the side wall 14 of the housing 1 is supported by the bearing part 11 extending from the side wall 14 of the housing 1, and the remaining area of the cell group 3 is supported by the support member 42 provided in the cooling chamber 41, that is, the bearing part 11 and the support member 42 respectively support different positions of the second side 35 of the cell group 3, thereby ensuring stability of the overall structure of the module-less battery pack.

In some embodiments, the housing 1 is provided with a bottom guard plate 12 at a side of the housing 1 adjacent to the second side 35, and the liquid cooling plate 4 is provided between the bottom guard plate 12 and the cell group 3. In an embodiment, the bottom guard plate 12 is bolted to the side of the housing 1 adjacent to the second side 35. In an embodiment, a side of the bottom guard plate 12 near the second side 35 is fixedly connected to one side of the liquid cooling plate 4 away from the second side 35. In an embodiment, the side of the bottom guard plate 12 near the second side 35 is fixedly connected to the side of the liquid cooling plate 4 away from the second side 35 by means of a friction stir welding process or is fixedly connected to the side of the liquid cooling plate 4 away from the second side 35 by means of a FDS process. Further, the second side 35 of the cell group 3 is bonded to the side of the liquid cooling plate 4 near the second side 35 by means of a heat conducting structure adhesive, so that the cell group 3 is fixedly connected to the liquid cooling plate 4 without affecting normal heat transfer, and a protective coating is provided at the side of the liquid cooling plate 4 near the housing 1 to protect the liquid cooling plate 4 and prevent the introduction of external heat from the side of the liquid cooling plate 4 close to the housing 1, affecting the cooling effect of the liquid cooling plate 4 on the cell group 3.

Referring to FIGS. 1, 2, 3, 4, 5, 6 and 7, in some embodiments, the adjacent cell groups 3 are bonded together by a structural member 33. Specifically, sides of the adjacent cells 32 close to each other are bonded to each other by the structural member 33, so as to improve the stability of the overall structure. In an embodiment, the support member 42 is provided in the cooling chamber 41 of the liquid cooling plate 4, and is located at the junction of the two adjacent cell groups 3, one side of the support member 42 supports a second side 35 of one of the two adjacent cell groups 3, and another side of the support member 42 supports a second side 35 of another of the two adjacent cell groups 3, that is, the support member 42 supports the two adjacent cell groups 3 at the same time, so as to effectively avoid a problem such as downward depression in the middle region of the liquid cooling plate 4. At the same time, the first side 34 of the cell group 3 is pressed against the pressure relief assembly 2, which is opposed to the explosion-proof valve 31 of the cell 32, the ejection ejected from the explosion-proof valve 31 is directed by the pressure relief assembly 2, and by pressing the pressure relief assembly 2 against the cell groups 3, it is possible to avoid upward channeling phenomenon of the cell groups 3 caused by the influence of the cyclic expansion force, so that the pressure relief assembly 2, which is a pressure relief passage of the cells 32, and the liquid cooling plate 4, which is a cooling source of the cells 32, form a fixed structure of the battery pack, thereby realizing the combination of the mechanical structures of the pressure relief assembly 2, the liquid cooling plate 4 and the housing 1, optimizing the structure of the battery pack, simplifying the process, and enhancing the rigidity of the system. In an embodiment, the pressure relief assembly 2 includes a pressure relief pipe 21, the trigger channel 23 is provided between the pressure relief pipe 21 and the explosion-proof valve 31 of the cell group 3, and the trigger pad 24 is fitted in the trigger channel 23. When the explosion-proof valve 31 of the cell 32 erupts, the position of the trigger pad 24 corresponding to the explosion-proof valve 31 is broken by the ejection, and then the ejection passes through the weakened portion 22 of the pressure relief pipe 21 into the pressure relief pipe 21. Since the impact force of the explosion-proof valve 31 when the valve is opened is upward, the trigger pads 24 at the remaining positions and the weakened portions 22 at the remaining positions of the pressure relief pipe 21 are not affected, and the remaining area of the trigger channel 23 is further closed to prevent the ejection ejected from the explosion-proof valve 31 of the cell 32 from sputtering onto the peripheral cells 32, or prevent the ejection in the pressure relief pipe 21 from flowing back onto the explosion-proof valves 31 of the peripheral cells 32, so that the peripheral cells 32 are prevented from being affected, thereby enabling the pressure relief pipe 21 to direct the ejection ejected from the explosion-proof valve 31, and solve the problem of thermal safety pressure relief of the module-less battery pack.

Referring to FIGS. 1, 2, 3, 4, 5, 6 and 7, in some embodiments, the adjacent cell groups 3 are bonded together by the structural members 33. Specifically, sides of the adjacent cells 32 close to each other are bonded to each other by the structural member 33, so as to improve the stability of the overall structure. In an embodiment, the liquid cooling plate 4 is provided with an avoidance recess part 43, the support member 42 is embedded in the avoidance recess part 43, the support member 42 is located at the junction of the two adjacent cell groups 3, one side of the support member 42 supports a second side 35 of one of the two adjacent cell groups 3, and another side of the support member 42 supports a second side 35 of another of the two adjacent cell groups 3, that is, the support member 42 supports the two adjacent cell groups 3 at the same time, so as to effectively avoid a problem such as downward depression of the liquid cooling plate 4. At the same time, the first side 34 of the cell group 3 is pressed against the pressure relief assembly 2, which is opposed to the explosion-proof valve 31 of the cell 32, the ejection ejected from the explosion-proof valve 31 is directed by the pressure relief assembly 2, and by pressing the pressure relief assembly 2 against the cell groups 3, it is possible to avoid upward channeling phenomenon of the cell groups 3 caused by the influence of the cyclic expansion force, so that the pressure relief assembly 2, which is a pressure relief passage of the cells 32, and the liquid cooling plate 4, which is a cooling source of the cells 32, form a fixed structure of the battery pack, thereby realizing the combination of the mechanical structures of the pressure relief assembly 2, the liquid cooling plate 4 and the housing 1, optimizing the structure of the battery pack, simplifying the process, and enhancing the rigidity of the system. In an embodiment, the pressure relief assembly 2 includes a pressure relief pipe 21, the trigger channel 23 is provided between the pressure relief pipe 21 and the explosion-proof valve 31 of the cell group 3, and the trigger pad 24 is fitted in the trigger channel 23. When the explosion-proof valve 31 of the cell 32 erupts, the position of the trigger pad 24 corresponding to the explosion-proof valve 31 is broken by the ejection, and then the ejection passes through the weakened portion 22 of the pressure relief pipe 21 into the pressure relief pipe 21. Since the impact force of the explosion-proof valve 31 when the valve is opened is upward, the trigger pads 24 at the remaining positions and the weakened portions 22 at the remaining positions of the pressure relief pipe 21 are not affected, and the remaining area of the trigger channel 23 is further closed to prevent the ejection ejected from the explosion-proof valve 31 of the cell 32 from sputtering onto the peripheral cells 32, or prevent the ejection in the pressure relief pipe 21 from flowing back onto the explosion-proof valves 31 of the peripheral cells 32, so that the peripheral cells 32 are prevented from being affected, thereby enabling the pressure relief pipe 21 to direct the ejection ejected from the explosion-proof valve 31, and solve the problem of thermal safety pressure relief of the module-less battery pack.

## Claims

1. A battery pack, **characterized in that** the battery pack comprises:
a housing (1);
a plurality of cell groups (3) comprising a plurality of cells (32);
a pressure relief assembly (2) connected to the housing (1) and opposite to an explosion-proof valve (31) of each of the cells (32), wherein the pressure relief assembly (2) presses against first sides (34) of the cell groups (3); and
a liquid cooling plate (4) connected to the housing (1) and abutting against second sides (35) of the cell groups (3), wherein the second sides (35) are opposite to the first sides (34), the liquid cooling plate (4) is provided with a support member (42), the support member (42) is located at a junction of two adjacent cell groups (3), and one side of the support member (42) supports a second side (35) of one of the two adjacent cell groups (3), another side of the support member (42) supports a second side (35) of another of the two adjacent cell groups (3).

2. The battery pack according to claim 1, **characterized in that** the pressure relief assembly (2) comprises a pressure relief pipe (21), the pressure relief pipe (21) is provided with a weakened portion (22), the weakened portion (22) is arranged opposite to the explosion-proof valve (31).

3. The battery pack according to claim 2, **characterized in that** a trigger channel (23) is formed between the pressure relief pipe (21) and the explosion-proof valve (31), and a trigger pad (24) is fitted into the trigger channel (23).

4. The battery pack according to claim 3, **characterized in that** the trigger pad (24) is made of a high-temperature resistant insulating material.

5. The battery pack according to claim 2, **characterized in that** a side of the pressure relief pipe (21) extends toward the cell groups (3) to form a pressing edge (25) abutting against the cell groups (3).

6. The battery pack according to any one of claims 1 to 5, **characterized in that** adjacent cells (32) are bonded together by a structural member (33).

7. The battery pack according to any one of claims 1 to 5, **characterized in that** the liquid cooling plate (4) is internally provided with a cooling chamber (41) for receiving a coolant.

8. The battery pack according to claim 7, **characterized in that** the support member (42) is provided in the cooling chamber (41).

9. The battery pack according to claim 8, **characterized in that** the support member is a grid-like structure.

10. The battery pack according to claim 7, **characterized in that** the liquid cooling plate (4) is provided with an avoidance recess part (43), and the support member (42) is fitted in the avoidance recess part (43).

11. The battery pack according to claim 1, **characterized in that** a side wall (14) of the housing (1) extends toward the second sides (35) of the cell groups (3) to form a bearing part (11), the bearing part (11) and the support member (42) support different positions of the second sides (35) of the cell groups (3).

12. The battery pack according to claim 1, **characterized in that** the battery pack further comprising a support frame (13) provided at outside of the cell groups (3), an end of the support frame (13) is fixedly connected to a side wall (14) of the housing(1), and the pressure relief assembly (2) is fixedly connected to the support frame (13).

13. The battery pack according to claim 12, **characterized in that** a base (15) is fixedly connected between the pressure relief assembly (2) and the support frame (13).

14. The battery pack according to claim 1, **characterized in that** a bottom guard plate (12) is provided at a side of the housing (1) close to the second sides (35), and the liquid cooling plate (4) is provided between the bottom guard plate (12) and the cell groups (3).

15. The battery pack according to claim 14, **characterized in that** a side of the bottom guard plate (12) close to the second sides (35) is fixedly connected to a side of the liquid cooling plate (4) away from the second sides (35).
